# EUROPÄISCHE PATENTSCHRIFT

(11) **EP 0 544 727 B1**
(45) Veröffentlichungstag und Bekanntmachung des Hinweises auf die Patenterteilung: **30.03.1994**
(21) Anmeldenummer: 91914748.8
(22) Anmeldetag: 16.08.1991
(51) Int. Cl.: B60P 3/32

(54) **FAHRZEUG**
VEHICLE
VEHICULE

(30) Priorität: 30.08.1990 DE 4027480
(43) Veröffentlichungstag der Anmeldung: 09.06.1993
(73) Patentinhaber: HÖTZEL, Bernard, D-48703 Stadtlohn (DE); KUHN, Sieghart, D-46354 Südlohn (DE)
(72) Erfinder: KUHN, Sieghart, D-4286 Südlohn (DE)
(74) Vertreter: Liesegang, Roland, Dr.-Ing.
(86) Internationale Anmeldenummer: EP9101559
(87) Internationale Veröffentlichungsnummer: WO9204205

(56) Entgegenhaltungen:
- EP-A- 0 010 019
- DE-A- 3 009 284
- DE-A- 3 336 014
- FR-A- 1 499 307
- FR-A- 2 087 488
- FR-A- 2 543 493
- GB-A- 963 781
- GB-A- 976 745
- US-A- 2 587 624
- US-A- 3 719 244
- US-A- 4 848 831

## Beschreibung

Die Erfindung betrifft ein Fahrzeug gemäß dem Oberbegriff des Anspruchs 1.

Ein Fahrzeug der gattungsgemäßen Art ist in der US-A-3 719 244 vorgeschlagen worden, um die fahrphysikalischen Nachteile eines Gespanns, bestehend aus einem Zugfahrzeug und einem über eine Deichsel gelenkig angekoppelten Anhängefahrzeug zu eliminieren, ohne die Nachteile eines Großraumfahrzeuges in Kauf nehmen zu müssen, die hauptsächlich aus schlechter Manövrierbarkeit und großem Parkraumbedarf bei Kurz- oder Nahfahrten resultieren. Bei dem bekannten Fahrzeug müssen die Hinterräder des Zugfahrzeuges mittels getrennter Anhebevorrichtungen angehoben werden. Auch ist ein Antrieb der Hinterachse des Zugfahrzeuges in dessen vom Anhängefahrzeug entkuppelten Zustand nicht möglich.

Das Grundproblem, das den aus dem druckschriftlichen Stand der Technik bekannten Vorschlägen zugrunde liegt, ist beispielsweise bei sogenannten Campingfahrzeugen zu beobachten. In der Praxis haben sich zwei verschiedene Grundformen von solchen Fahrzeugen durchgesetzt. Eine Grundform ist das bekannte Gespann aus einem Zugfahrzeug, im allgemeinen in Form eines PKW, und einem Wohnanhänger. Ein solches Gespann bietet den Vorteil, daß der Wohnwagen bei Nichtgebrauch abgehängt werden kann, so daß beispielsweise am Urlaubsort der PKW uneingeschränkt genutzt werden kann. Der Nachteil von Gespannen liegt in ihren vergleichsweise schlechten Fahreigenschaften. Durch den zusätzlichen Freiheitsgrad um die durch die Kupplung der Deichsel verlaufende Hochachse werden sogenannte Knickwinkelschwingungen ermöglicht, die ein Ausbrechen des Wohnwagenanhängers etc. begünstigen.

Dies hat dazu geführt, daß Wohnwagengespanne in den meisten Staaten generell einer Geschwindigkeitsbeschränkung unterliegen.

Eine andere übliche Fahrzeugform sind die sogenannten Wohnmobile. Solche Wohnmobile lassen sich leichter und fahrstabiler fahren als Gespanne und bieten darüber hinaus den Vorteil, daß sich die im Zugfahrzeug aufhaltenden Personen auch während der Fahrt in den Wohnbereich begeben können, was bei den Gespannen schon aus gesetzlichen Gründen nicht möglich ist. Nachteilig sind bei einem Wohnmobil naturgemäß der große Platzbedarf, das hohe Gewicht, die damit verbundenen Parkplatzsorgen, hohe Treibstoffkosten etc., die auch dann gegeben sind, wenn ein kleineres Fahrzeug vollständig ausreichen würde.

Aus dem DE-GM 87 03 519 ist eine Fahrzeugeinheit bekannt, bei der ein Anhänger über eine am Rahmenende eines als Zugfahrzeug dienenden Personenkraftwagens starr angeordnete zug- und druckfeste Verbindungseinrichtung starr mit dem Personenkraftwagen gekuppelt werden kann. Ein Nachteil dieser Fahrzeugeinheit ist, daß die Hinterachse des Zugfahrzeugs und die einzige Achse des Anhängers im zusammengekuppelten Zustand eng beieinander liegen müssen, weil der Gesetzgeber nur Achsen mit einem Achsabstand von maximal 1m, per gesetzlicher Fiktion als eine Achse betrachtet. Nur eine diese Beschränkung erfüllende Konstruktion führt aber zu einer verkäuflichen Fahrzeugeinheit, weil eine mit insgesamt drei unabhängigen Achsen (mit Achsabständen oberhalb 1m) versehene Fahrzeugeinheit mit einem normalen PKW-Führerschein nicht gesteuert werden darf. Größere Fahrzeugeinheiten lassen sich nach diesem Bauprinzip nicht realisieren, da höhere Fahrzeuggewichte größere Achsabstände bedingen.

In ähnlicher Weise wird gemäß der DE-OS 31 29 203 ein einachsiger Anhänger so mit einem konventionellen Zugfahrzeug gekoppelt, daß die Hinterachse des Zugfahrzeuges und die Achse des Anhängefahrzeuges mit einem Achsabstand von weniger als 1m beieinander angeordnet sind.

Die genannten Nachteile sind bei der GB-PS 2 006 130 vermieden. Bei dieser Konstruktion wird ein einachsiger Anhänger über eine lange starre Deichsel mit einem frontgetriebenen Zugfahrzeug verbunden, wobei die Deichsel mit der Bodengruppe einerseits und Dachteile von Anhänger und Zugfahrzeug andererseits derart starr verbunden werden, daß das Heck des Zugfahrzeugs samt Hinterachse und Hinterrädern angehoben wird. Auf diese Art ergibt sich eine starre Fahrzeugeinheit, bei der die Hinterachse samt Rädern des Zugfahrzeugs von der Fahrbahn abgehoben sind. Nachteile dieser Konstruktion sind zum einen die aufwendige Kupplungskonstruktion und -betätigung und zum anderen die ungünstige Beeinflussung der Schwerpunktlage der Fahrzeugkombination bei angehobenem Heck des Zugfahrzeugs.

Aus der US-PS 3 825 089 ist schließlich eine Fahrzeugkombination bekannt, bei der nach Zusammenkuppeln des Zug- mit dem Anhängefahrzeug die Hinterachse des Zugfahrzeugs komplett angehoben wird, wobei das Zugfahrzeug in seiner waagerechten Lage verbleibt. Nachteilig an dieser Konstruktion ist, daß die gesamte Hinterachse angehoben wird, was zum einen eine Radaufhängung in Form einer Starrachse voraussetzt und zum anderen ebenfalls eine ungünstige Schwerpunktsverlagerung bewirkt. Die fahrphysikalischen Nachteile einer starren Hinterachse gestatten ihren Einsatz in qualitativ hochwertigen PKW-Fahrwerken nicht. Diese bekcnnte Konstruktion eignet sich daher beispielsweise nicht für die Kombination eines vergleichsweise schnellen Zugfahrzeugs mit einem Wohnmobil-Anhängeteil.

Die DE-PS 867 057 beschreibt eine Vorrichtung zum selbsttätigen Abheben der Räder einer LKW-Achse von der Fahrbahn mittels um die Achse schwenkbaren Lenkern, an deren freien Enden die Räder angeordnet sind, und mittels eines Schwenkantriebes mit Hydraulikzylinder, der über eine Zahnstangen/Ritzel-Anordnung auf eine Achswelle wirkt.

Schließlich ist aus der DE 30 09 284 A1 eine Anhängerkupplung mit Kupplungsmaul am Zugfahrzeug und demgegenüber schwenkbarem Deichselansatz am Anhängefahrzeug bekannt, bei der sämtliche Steckanschlüsse für die Kraft- und Stromversorgung des Anhängefahrzeugs in einem gemeinsamen Kupplungsstecker integriert sind. Dabei sorgt ein Endschalter für eine Unterrichtung des Fahrers über vollzogenes Einkuppeln.

Der Erfindung liegt die Aufgabe zugrunde, eine Fahrzeugkombination der aus der US-A 3 719 244 bekannten Art zu schaffen, bei der die hinteren Räder des Zugfahrzeuges ohne Verändern der normalen Fahrzeughöhenlagen oder -ebenen, insbesondere der Lage des Hecks und ohne unnötige Schwerpunktsverlagerung anhebbar sind, so daß eine einfache Ausbildung und Betätigung der starren formschlüssigen Kupplung zwischen Zugfahrzeugen und Anhängefahrzeug möglich wird. Darüber hinaus soll die Konstruktion ermöglichen, eine hochwertige Hinterachskonstruktion des Zugfahrzeuges und zusätzlich auch einen Hinterradantrieb zu realisieren. Schließlich soll bei einer Fahrzeugkombination der beschriebenen Art eine optimale Bremsfunktion sowohl in gekuppeltem als auch in entkuppeltem Zustand gewährleistet werden. Diese Aufgabe löst Anspruch 1.

Vorteilhafte Ausgestaltungen der Erfindung sind in den Unteransprüchen angegeben.

Bei der Fahrzeugkombination nach der Erfindung können die hinteren Räder des Zugfahrzeugs im mit dem Anhängefahrzeug gekuppelten Zustand durch Betätigen des Schwenkantriebs von der Fahrbahn abgehoben werden, ohne daß sich die Heck- und Hinterachsenlage verändern und ohne daß die Konstruktion des Fahrwerks des Zugfahrzeugs irgendwelchen Einschränkungen unterworfen ist.

Da die Ebenen von Zug- und Anhängefahrzeug in gekuppeltem und entkuppeltem Zustand unverändert sind, läßt sich eine in Aufbau und Handhabung sehr einfache Kupplungskonstruktion der starren Kupplung verwirklichen.

Aufgrund der erfindungsgemäßen Konstruktion der Radaufhängung der Hinterräder des Zugfahrzeuges sind die Kennwerte der Radstellung wie Vor- bzw. Nachspur. Sturz, Nachlauf und die Radhebungskurve optimierbar, ohne daß die Eigenschaft der Abhebbarkeit der Räder von der Fahrbahn in zusammengekuppeltem Zustand beeinträchtigt wird. Bisher mußte die Möglichkeit, die Räder von der Fahrbahn abzuheben, mit der Verwendung einer Starrachse mit den ihr innewohnenden fahrtechnischen Nachteilen sowie der Notwendigkeit erkauft werden, die Räder durch Anheben der Starrachse von der Fahrbahn abzuheben, was zu unnötiger Verkleinerung des nutzbaren Stauraums im Fahrzeug führte.

Wegen der starren Kupplung der beiden Fahrzeuge erlaubt der Gesetzgeber einen Aufenthalt während der Fahrt im Anhängefahrzeug. Um den Durchgang zu ermöglichen, können gemäß einer weiteren Ausgestaltung der Erfindung Roll- oder Schiebetüren in gegenüberliegenden Wänden beider Fahrzeuge vorgesehen sein.

In einer bevorzugten Ausführungsform der Erfindung sind die Lenker, an denen die hinteren Räder des Zugfahrzeuges angeordnet sind, als Längslenker ausgebildet und um eine gemeinsame zur Fahrzeugquerachse parallele Achse schwenkbar. Eine solche Anordnung bietet den Vorteil, daß die Schwenkvorrichtung zum Schwenken der Lenker und Abheben der Räder von der Fahrbahn besonders einfach ausgeführt werden kann.

Im Rahmen der Erfindung ist beabsichtigt, die Kupplungsteile zur Verbindung von Zug- und Anhängefahrzeug so auszugestalten, daß sich der Kupplungs- bzw. Entkupplungsvorgang möglichst einfach und komfortabel bewerkstelligen läßt.

In einer bevorzugten Ausführung der Erfindung nach Anspruch 11 weist die Anhängeeinheit zwei Kupplungsarme auf, die durch Abschnitte der Längsträger des Rahmens des Anhängefahrzeugs gebildet werden, und die mit in die Stoßstange des Zugfahrzeugs integrierte Kupplungsmäuler zusammenwirken. Eine solche Ausführung bietet den Vorteil, daß sich Zugfahrzeug und Anhängefahrzeug besonders einfach zusammenkuppeln lassen, wobei die Fahrzeuge beim Kuppeln und Entkuppeln stets in gleicher Ebene verbleiben. Besonders vorteilhaft ist weiterhin eine Ausgestaltung der erfindungsgemäßen Fahrzeugkombination, bei der in die Kupplungsarme des Anhängefahrzeugs bzw. in die Kupplungsmäuler des Zugfahrzeugs elektrische bzw. hydraulische Verbindungselemente integriert sind, so daß Zug- und Anhängefahrzeug nach dem Zusammenkuppeln automatisch elektrisch und hydraulisch miteinander verbunden sind, so daß Signaleinrichtungen wie Bremslichter, Fahrtrichtungsanzeiger und die Bremsanlage des Anhängefahrzeugs ohne zusätzliche Maßnahmen vom Zugfahrzeug aus betätigt werden können. In diesem Zusammenhang ist die Ausgestaltung der Fahrzeugkombination gemäß Anspruch 16 von besonderer Bedeutung. Diese Ausgestaltung gewährleistet, daß auch bei gekuppelter Fahrzeugeinheit ein Bremsbetrieb mit zwei Bremskreisen entsprechend den gesetzlichen Vorschriften wie bei einem einzigen Fahrzeug gewährleistet ist.

In einer weiteren bevorzugten Ausgestaltung sind die Radführungselemente des Anhängefahrzeugs wie diejenigen der Hinterräder des Zugfahrzeugs ausgebildet. Dies erlaubt einerseits, bei Bedarf auch die Räder des Anhängefahrzeugs antreibbar auszubilden, und andererseits eine Niveauregulierung, die ein Absenken auf die Fahrbahn zum Zwecke des Beund Entladens ermöglicht.

Die Erfindung wird im folgenden anhand der Zeichnungen näher erläutert. Es zeigen:
- Fig. 1: ein erfindungsgemäßesFahrzeug in gekuppeltem Zustand.
- Fig. 2: die Fahrzeugkombination aus Figur 1 in entkuppeltem Zustand,
- Fig. 3: eine zum Lastentransport geeignete Variante eines Anhängefahrzeugs für eine erfindungsgemäße Fahrzeugkombination.
- Fig. 4: eine Rückansicht eines Zugfahrzeugs für eine erfindungsgemäße Fahrzeugkombination.
- Fig. 5: eine Draufsicht auf die hintere Radaufhängung mit Schwenkvorrichtung des in Figur 1, 2 und 4 dargestellten Zugfahrzeugs.
- Fig. 6: ein Schnitt durch eine erfindungsgemäße Schwenkvorrichtung längs der Linie VI-VI in Figur 5,
- Fig. 7: ein Schnitt längs der Linie VII-VII in Figur 6,
- Fig. 8: eine Variante eines Schwenkantriebs für eine Radaufhängung gemäß Figur 5.
- Fig. 9: eine Variante einer hinteren Radaufhängung für ein Zugfahrzeug für eine erfindungsgemäße Fahrzeugkombination,
- Fig. 10: einen Schnitt längs der Linie X-X in Figur 9,
- Fig. 11: einen Schnitt längs der Linie XI-XI in Figur 9,
- Fig. 12: eine Seitenansicht des in Figur 11 dargestellten, ausgeschnittenen Teils,
- Fig. 13: eine Draufsicht auf Rahmen und Fahrwerk eines Anhängefahrzeugs für eine erfindungsgemäße Fahrzeugkombination,
- Fig. 14: eine Draufsicht auf einen Kupplungsarm und ein Kupplungsmaul für eine erfindungsgemäße Fahrzeugkombination,
- Fig. 15: einen Schnitt durch einen in ein Kupplungsmaul eingeführten Kupplungsarm mit einer automatischen Verriegelungsvorrichtung,
- Fig. 16: eine zwischen Ankupplungsarm und Kupplungsmaul angeordnete elektrische Verbindungsstelle,
- Fig. 17: eine Draufsicht auf Rahmen und Fahrwerk eines Anhängefahrzeugs für eine erfindungsgemäße Fahrzeugkombination mit einer Vorrichtung zur Niveauregulierung, und
- Fig. 18: einen Schnitt längs der Linie XVIII-XVIII in Figur 17.

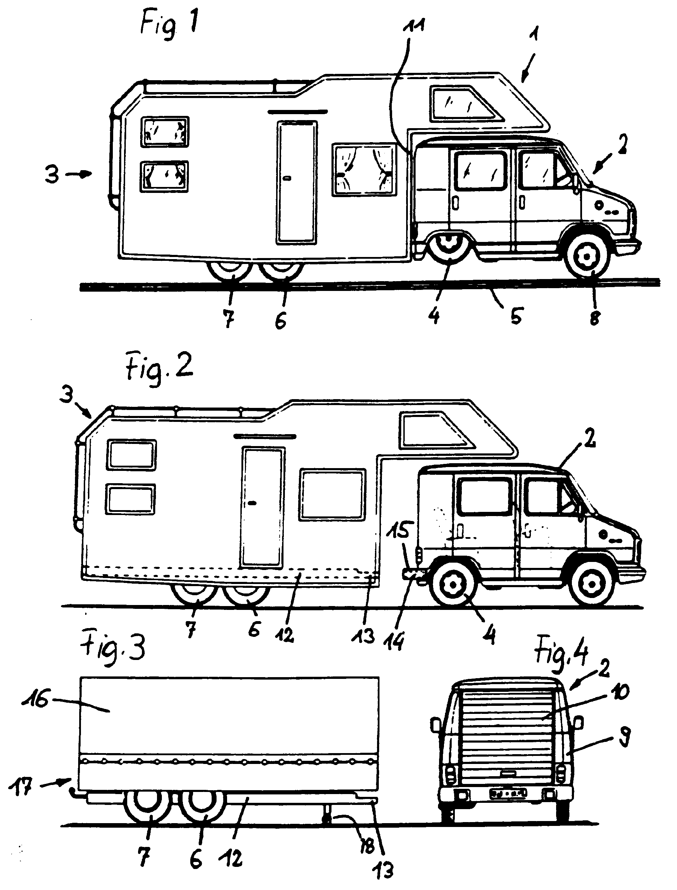

Figur 1 zeigt ein Fahrzeug 1 in zusammengekuppeltem Zustand. Es besteht aus einem frontgetriebenen Zugfahrzeug 2 und einem Anhängefahrzeug 3. das bei dem Ausführungsbeispiel als Wohnmobilteil ausgestaltet ist. Das Zugfahrzeug 2 weist ein hinteres Radpaar 4 auf, das in zusammengekuppeltem Zustand von der Fahrbahn 5 abgehoben ist. Das Anhängefahrzeug 3 weist zwei Radpaare 6 und 7 auf, wobei der Abstand der beiden Radpaare voneinander vorzugsweise kleiner als 1 Meter ist, jedoch auch größer sein kann, um eine gewünschte Gewichtsaufteilung auf die einzelnen Achsen zu erzielen. Das Zugfahrzeug 2 weist zwei angetriebene und gelenkte Vorderräder 8 auf, die auch die Vorderräder des zusammengekuppelten Fanrzeugs bilden. Die Radpaare des Anhängefahrzeugs 3 bilden die hinteren Räder der gesamten Fahrzeugkombination 1. Die zusammengekuppelte Fahrzeugkombination ist starr und verwindungssteif und weist sämtliche fahrphysikalischen Vorteile eines einteiligen Fahrzeugs auf.

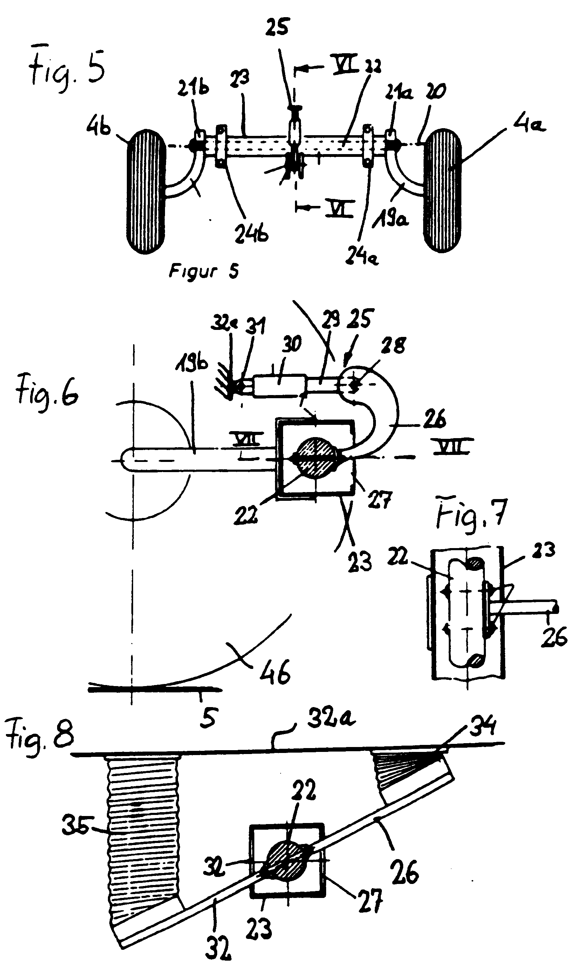

Wie in Figur 4 dargestellt, weist das Zugfahrzeug an seiner senkrecht angeordneten Rückwand 9 eine rolladenartig ausgebildete Türe 10 auf, die sich im mit der Anhängeeinheit 3 zusammengekuppelten Zustand öffnen läßt. Auch das Anhängefahrzeug weist eine hier nicht dargestellte rolladenartige Türe in seiner dem Zugfahrzeug zugewandten vorderen Seite 11 auf, die ebenfalls im zusammengekuppelten Zustand geöffnet werden kann, so daß ein freier Durchgang vom Zugfahrzeug 2 in das Anhänge- bzw. Campingfahrzeug 3 geschaffen wird.

In Figur 2 ist die in Figur 1 dargestellte Fahrzeugkombination in entkuppeltem Zustand dargestellt. Die hinteren Räder 4 des Zugfahrzeuges 2 befinden sich nun in der Normalstellung, so daß das Zugfahrzeug unabhängig vom Anhängefahrzeug 3 verwendet werden kann. Dabei können die hinteren Räder 4 bei der erfindungsgemäßen Konstruktion auch angetrieben sein, so daß gegebenenfalls ein geländegängiges Fahrzeug zur Verfügung steht. Das Anhängefahrzeug 3 wird auf seinen beiden Radpaaren 6 und 7 abgestellt, wobei gegebenenfalls zusätzliche - hier nicht dargestellte - Abstützelemente verwendet werden können. In Figur 2 mit Strichlinien angedeutet sind zwei in der Seitenansicht hintereinander liegende Rahmenlängsträger 12, die an ihren vorderen Enden in Kupplungsarme 13 übergehen. Im zusammengekuppelten Zustand greifen die Kupplungsarme 13 in Kupplungsmäuler 14, die in eine Stoßstange 15 des Zugfahrzeugs 2 eingelassen sind. Die Kupplungsmäuler 14 bzw. die Stoßstange 15 sind mit dem hier nicht dargestellten Rahmen des Zugfahrzeuges 2 fest verbunden, so daß nach dem Zusammenkuppeln von Zug- und Anhängefahrzeug eine verwindungssteife Einheit entsteht.

In Figur 3 dargestellt ist eine Alternative eines Anhängefahrzeugs für eine erfindunggemäße Fahrzeugkombination, bei der oberhalb eines Rahmens 12 mit Kupplungsarmen 13 ein Pritschenaufbau 16 angeordnet ist. Das im abgekuppelten Zustand dargestellte Anhängefahrzeug 17 weist ebenfalls zwei Radpaare 6 und 7 auf und ist mittels einer oder mehrerer Stützrollen 18 abgestützt.

In Figur 5 ist eine Hinterradaufhängung für das Zugfahrzeug 2 in einer Draufsicht dargestellt. Das rechte Hinterrad 4a und das linke Hinterrad 4b sind jeweils an gezogenen Längslenkern 19a und 19b aufgehängt. Die Längslenker 19a und 19b sind um die gemeinsame zur Fahrzeugquerachse parallele Achse 20 drehbar. Die Längslenker 19a und 19b sind mit ihren Enden 21a und 21b in nicht näher dargestellten Lagern gelagert und mit einer in der Drehachse 20 liegenden Torsionsfeder 22 verbunden. Die Torsionsfeder 22 liegt in einem Achsrohr 23, an dessen Enden die Enden 21a und 21b der Längslenker 19a und 19b haltende, nicht dargestellte Lager befestigt sind. Das Achsrohr 23 selbst ist mittels Schellen 24a und 24b mit dem Rahmen des Zugfahrzeugs verbunden. In der zwischen den Rädern 4a und 4b verlaufenden Symmetrieebene ist eine Schwenkvorrichtung 25 angeordnet, die mit ihrem einen Ende mit der Torsionsfeder 22 und mit ihrem anderen Ende mit dem Fahrzeugaufbau verbunden ist.

In Figur 6 ist im Schnitt längs der Linie VI-VI in Figur 5 die Schwenkvorrichtung in vergrößertem Maßstab dargestellt. Das linke Hinterrad 4b und der Längslenker 19b sind andeutungsweise dargestellt. Die Torsionsfeder 22 ist über zwei in Figur 7 dargestellte Schraubverbindungen mit einem Hebel 26 verbunden. Der Hebel 26 ist durch eine Öffnung 27 im Achsrohr 23 nach außen geführt und weist eine gebogene Form auf. An seinem von der Torsionsfeder 22 abgewandten Ende 28 ist er mit der Kolbenstange 29 eines hydraulischen Hubzylinders 30 verbunden. Der Hubzylinder 30 ist über ein Gelenk 31 am Rahmen 32 des Zugfahrzeuges 2 abgestützt.

Wird das Rad 4b durch eine Bodenwelle in der Fahrbahn 5 nach oben ausgelenkt, so bewegt es sich von dem Längslenker 19b zwangsgeführt auf einem Kreisbogen um die Achse 20. Der Längslenker 19b wirkt dabei kurbelartig auf die Torsionsfeder 22, die bis zu ihrer Mittelebene hin verdreht wird. In der Mittelebene wird sie über die in Figur 7 dargestellte Schraubverbindung und den Hebel 26, der sich über die Kolbenstange 29, den Hubzylinder 30 und das Gelenk 31 an dem Rahmen 32 abstützt, an weiterem Verdrehen gehindert. Die zu dem rechten Hinterrad 4a führende Hälfte der Torsionsfeder 22 bleibt daher unbelastet, so daß eine gegenseitige Beeinflussung der Hinterräder 4a und 4b unterbleibt. Sollen nun im zusammengekuppelten Zustand der Fahrzeuge die Räder 4a und 4b von der Fahrbahn 5 abgehoben werden, so wird die Kolbenstange 29 vom Hubzylinder 30 hydraulisch ausgefahren, so daß sich der Hebel 26 und damit die Torsionsfeder 22 bugwärts, d.h. in der Darstellung gemäß Figur 6 im Uhrzeigersinn, drehen. Mit dem Drehen der Torsionsfeder 22 bewegen sich auch die mit ihr fest verbundenen Längslenker 19a und 19b, wobei besonders vorteilhaft ist, daß durch die direkte Anlenkung des Hebels 26 an der Torsionsfeder keine Federkräfte überwunden werden müssen. Die Ansteuerung des hydraulischen Hubzylinders 30 kann dabei automatisch erfolgen, sobald die Fahrzeuge zusammengekuppelt sind.

In Figur 8 ist eine Variante zum Verdrehen der in dem Achsrohr 23 angeordneten Torsionsfeder 22 dargestellt. Das Achsrohr 23 weist hierbei zwei Öffnungen 27 und 32 auf. Durch die Öffnungen 27 und 32 erstrecken sich Hebel 26 und 33, an deren der Torsionsfeder 22 abgewandten Enden pneumatische Faltenbälge 34 und 35 angeordnet sind. Die Faltenbälge 34 und 35 stützen sich dabei gegen den Rahmen 32 des Zugfahrzeuges 2 ab. Sollen die Räder von der Fahrbahn 5 abgehoben werden, so wird der Faltenbalg 34 mit Druckluft beaufschlagt, so daß über den Hebel 26 die Torsionsfeder 22 verdreht wird. Sollen die Räder wieder abgesenkt werden, so wird der Faltenbalg 34 drucklos gemacht, während der Faltenbalg 35 mit Druckluft beaufschlagt wird. Über den Hebel 33 wird die Torsionsfeder 22 dann wieder in ihre Ursprungslage zurückgedreht. Ein Vorteil dieser Anordnung ist es, daß die Abstützung der Torsionsfeder 22 nicht starr über ein imkompressibles Medium wie bei dem hydraulischen Hubzylinder 30 erfolgt, sondern daß die Abstützung über die pneumatischen Faltenbälge 34 bzw. 35 eine zusätzliche Federwirkung erzeugt. Die Torsionswelle 22 kann daher unter Umständen schwächer dimensioniert werden, was mit einer entsprechenden Gewichtseinsparung verbunden ist.

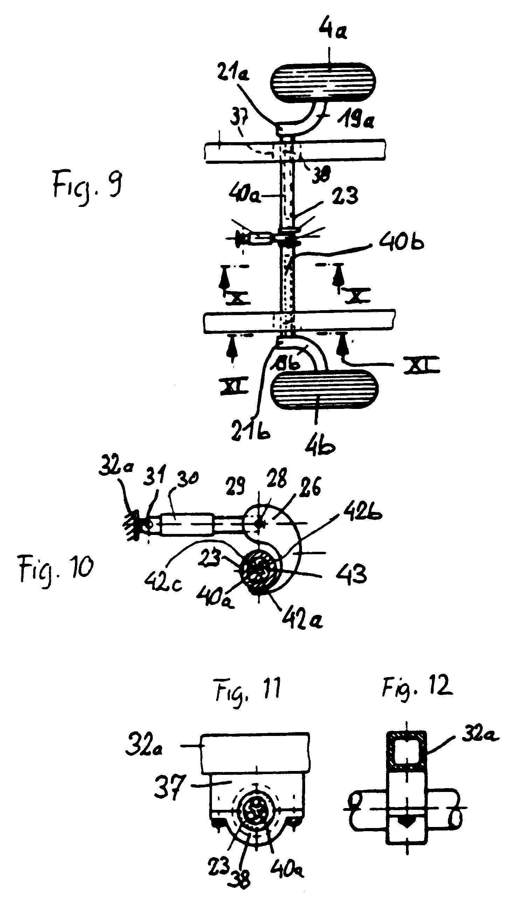

In Figur 9 ist in Draufsicht eine alternative Ausführung einer Hinterradaufhängung gezeigt. Die Hinterräder 4a und 4b sind dabei ebenfalls an gezogenen Längslenkern 19a und 19b aufgehängt. Die Längslenker sind ebenfalls an ihren Enden 21a und 21b in mit einem Achsrohr 23 verbundenen Lagern drehbar gelagert. Das Achsrohr selbst ist im Gegensatz zu der in Figur 5 dargestellten Ausführung nicht fest mit dem Rahmen 32a verbunden, sondern drehbar in zwei Lagern 37. Gegen axiale Verschiebung ist das Achsrohr durch einen in dem Lager 37 in einer Nut aufgenommenen Federring 38 gesichert.

Die Enden 21a und 21b der Längslenker 19a und 19b sind - wie in Figur 9 gestrichelt dargestellt - mit je einem Profilstab 40a bzw. 40b verbunden, der jeweils etwas kürzer ist als die halbe Länge des Achsrohres 23. Wie in Figur 10 anhand des Schnitts X-X in Figur 9 dargestellt, weist der Profilstab 40a einen im wesentlichen dreiecksförmigen Querschnitt auf. An den Seiten des Dreiecks sind Gummiblöcke 42a, b und c angeordnet, die sich über formschlüssige Anschläge 43 an der Innenwandung des Achsrohres 23 abstützen. Beim Verdrehen des Längslenkers und des mit ihm verbundenen Profilstabes wirken die Gummiblöcke 42a, b und c als Federelemente, die auf ein relatives Verdrehen des Profilstabes 40a gegenüber dem Achsrohr 23 mit einer Rückstellkraft reagieren. Bei einfachen Fahrwerken können die Gummielemente darüber hinaus durch ihre Materialdämpfung auch eine Dämpfungsfunktion übernehmen.

Das Achsrohr 23 ist mit einem Hebel 26 verbunden, der an seinem dem Achsrohr abgewandten Ende 28 über eine Kolbenstange 29 und einen hydraulischen Hubzylinder 30 sowie ein Gelenk 31 mit dem Rahmen 32a des Zugfahrzeuges 2 verbunden ist.

Wie aus Figur 10 im Zusammenhang mit Figur 9 ersichtlich, ist der Schwenkantrieb in Form des Hubzylinders 30 und der Kolbenstange 29 bei dieser Ausführungsform entgegengesetzt zu den Längslenkern 19 angeordnet, so daß die Kolbenstange 29 zum Anheben der Räder 4a und 4b eingezogen werden muß. Wird die Kolbenstange 29 vom Hubzylinder 30 eingefahren, so bewegt sich der Hebel 26 und damit das Achsrohr 23 im Uhrzeigersinn, so daß über die Anschläge 43, die Gummiblöcke 42a, b und c sowie die Profilstäbe 40a und 40b die Längslenker 19a und 19b gedreht und damit die Räder angehoben werden.

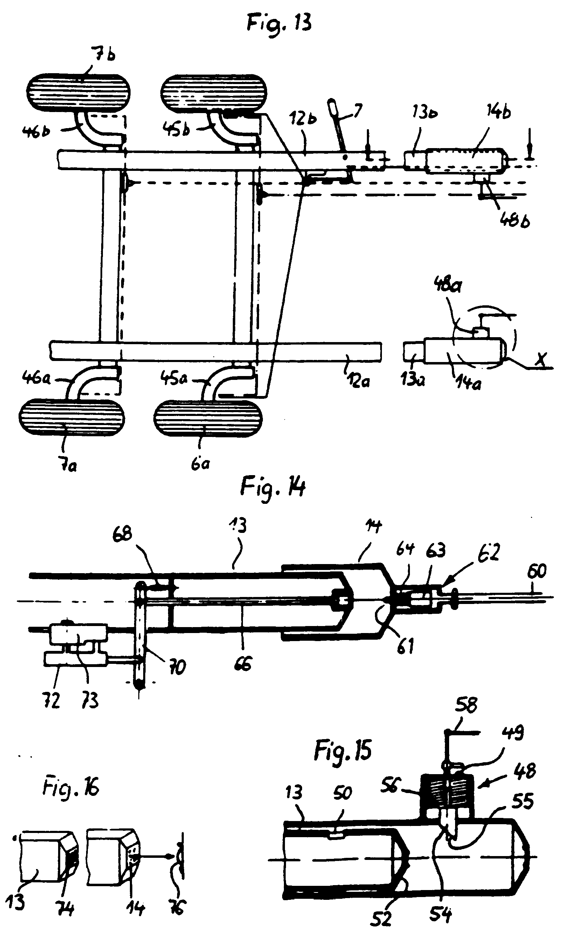

Figur 13 zeigt das Fahrwerk des in Figur 1 bzw. Figur 3 dargestellten Anhängefahrzeugs 2 bzw. 17 in der Draufsicht. Die Räder 6a und 6b bzw. 7a und 7b sind an gezogenen Längslenkern 45a, 45b und 46a und 46b geführt. Die Längsträger 12a und 12b des Rahmens gehen in Kupplungsarme 13a und 13b uber, die in am Zugfahrzeug 2 angeordnete Kupplungsmäuler 14a und 14b eingeführt sind und dort mittels Verriegelungsvorrichtungen 48a und 48b gehalten werden. Das Detail XV ist in Figur 15 in größerem Maßstab dargestellt.

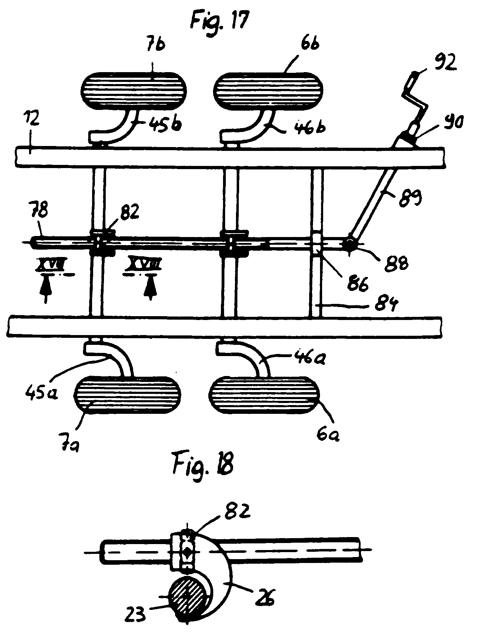

Ein Kupplungsarm 13 weist dabei eine Querbohrung 50 auf und geht an seinem vorderen Ende in eine abgeschrägte Anlauffläche 52 über. Der Querschnitt des Tragarms wie des korrespondierenden Kupplungsmauls 14 kann vorzugsweise rechteckig oder auch rund sein. An dem Kupplungsmaul 14 ist eine Verriegelungsvorrichtung 48 angeordnet, die im wesentlichen aus einem federbelasteten Bolzen besteht, der an seinem vorderen Ende eine abgeschrägte Anlauffläche 55 aufweist. Wird das Anhängefahrzeug 3 bzw. 17 durch entsprechendes Ausrichten einer Führungsrolle 18 waagerecht abgestellt, so befindet sich der Tragarm 13 auf gleicher Höhe wie das Kupplungsmaul 14 am Zugfahrzeug 2. Setzt der Fahrer des Zugfahrzeugs 2 nun zurück, so werden der Kupplungsarm 13 bzw. bei einer Ausführung mit zwei Kupplungsarmen beide Kupplungsarme 13 in die jeweiligen Kupplungsmäuler eingeführt, wobei die abgeschrägte Anlauffläche 52 über die abgeschrägte Anlauffläche 55 den Bolzen 54 gegen die Vorspannkraft einer Feder 56 auslenkt. Sobald der Kupplungsarm 13 vollständig in das Kupplungsmaul 14 eingefahren ist, fluchtet der Bolzen 54 mit der Bohrung 50 und wird unter dem Einfluß der Feder 56 in die Bohrung 50 einrasten. Auf diese Art und Weise wird eine automatische Verriegelung gewährleistet. Wie in den Figuren 14 und 16 dargestellt, können dabei gleichzeitig die elektrischen Kreise des Zug- und des Anhängefahrzeuges gekoppelt sowie die Bremsübertragung sichergestellt werden.

Der Bolzen 54 kann mit einem Gestänge 58 verbunden sein, so daß er gegebenenfalls fernbedient in eine Löseposition gezogen werden kann.

Ein Kontrollichtschalter 49 signalisiert dem Fahrer über eine Anzeigelampe (nicht gezeigt) im Armaturenbrett des Zugfahrzeugs 2 den vollendeten und gesicherten Kupplungsvorgang.

Gemäß Figur 14 ist in dem hohlen Kupplungsarm 13 sowie in dem Kupplungsmaul 14 eine Vorrichtung mit hydraulischem Zylinder 62 und Gestänge 66 angeordnet, die eine mechanisch-/hydraulische Übertragung der Bremswirkung sicherstellt.

Der hydraulische Zylinder 62 enthält einen Kolben 63 mit einem in Richtung des Kupplungsarmes 13 auskragenden Bolzen 61. Der Kolben 63 wird über eine hydraulische Leitung 60 gegen die Kraft einer Druckfeder 64 beaufschlagt. Bei Erhöhung des Druckes in der Leitung 60 aufgrund einer Betätigung der hydraulischen Bremse des Zugfahrzeuges 2 über dessen Hauptbremszylinder wird in gekuppeltem Zustand von Zugfahrzeug und Anhängefahrzeug der Druck in der Leitung 60 mechanisch über den Bolzen 61 auf das Gestänge 66 und von dort über den Hebel 70 zum Hauptbremszylinder 72 des Anhängefahrzeuges übertragen, zu dem ein Ausgleichsbehälter 73 gehört. Über den so im Hauptbremszylinder 72 aufgebauten Druck werden die (nicht gezeigten) Radzylinder des Anhängefahrzeugs 3 betätigt. Beim Lösen der Bremse im Zugfahrzeug stellen die Rückholfedern in den Radzylindern die Bremsbacken und damit den Kolben im Hauptbremszylinder 72, den Hebel 70 und das Gestänge 66 wieder in Bremsbereitschaftsstellung zurück.

Der Druck in der hydraulischen Leitung 60 wird über eine dritte Kammer des im übrigen für ein Zweikreisbremssystem des Zugfahrzeuges konzipierten Hauptbremszylinders des Zugfahrzeuges aufgebracht. Alternativ kann dieser Druck auch über einen Geberzylinder im Zugfahrzeug aufgebracht werden, der einem üblichen Tandem-Hauptzylinder für ein Zweikreisbremssystem des Zugfahrzeuges zugeordnet ist. Bei dieser Konzeption der Bremsanlage werden die Räder 4a und 4b des Zugfahrzeuges ungeachtet der Tatsache, daß sie in gekuppeltem Zustand von der Fahrbahn abgehoben sind, mitgebremst. Aufgrund der mechanisch-/hydraulischen Übertragung des Bremsdruckes in der dritten Kammer des Hauptbremszylinders bzw. im Geberzylinder des Zugfahrzeuges auf den Hauptbremszylinder 72 des Anhängefahrzeuges die gekuppelte Fahrzeugkombination trotz zweier unabhängiger Flüssigkeitskreise wie bei einem einheitlichen Fahrzeug mit einem Zweikreisbremssystem gebremst, weil selbst ein kleiner hydraulischer Bremsdruck im Zugfahrzeug durch die Hebelwirkung des Hebels 70 verstärkt an den Hauptbremszylinder 72 des Anhängefahrzeuges unmittelbar weitergegeben wird.

Das Bremssystem läßt sich anfänglich und bei einer späteren Wartung dadurch einstellen, daß das Gestänge 66 in der Länge einstellbar ausgebildet wird. So kann dieses Gestänge 66 auf eine Länge eingestellt werden, bei welcher in gekuppeltem Zustand der Bolzen 61 schon bei geringster Betätigung der hydraulischen Bremse des Zugfahrzeuges das Gestänge 66 verschiebt. Aufgrund des Bremsdruckes in der Leitung 60 kann der Bolzen 61 bis zu 3/4 seiner Länge ausfahren. Nach Beendigung jedes Bremsvorganges wird er durch die Feder 64 etwa um die Hälfte seiner Gesamtlänge in den hydraulischen Zylinder 62 zurückgedrückt. Auf diese Weise wird ein automatischer Bremsdruckausgleich in den Bremssystemen der Fahrzeuge 2 und 3 bewirkt.

Gemäß Figur 16 ist an der Stirnfläche eines der beiden Kupplungsarme 13 ein elektrischer Kontakt 74 vorgesehen, der beim Kuppeln an einem entsprechend zungenartig ausgebildeten Kontakt 76 im Kupplungsmaul 14 zur Anlage kommt. Der Kontakt 76 bewirkt dabei, daß die elektrische Verbindung zwischen Zugfahrzeug 2 und Anhängefahrzeug 3 bzw. 17 automatisch hergestellt wird. Zusätzlich oder alternativ kann das Anhängefahrzeug auch eine getrennte Stromversorgung aufweisen.

Gemäß Figur 17 ist ein Fahrwerk des Anhängefahrzeugs mit zwei der in Figur 9 dargestellten und beschriebenen Achskonstruktionen ausgestattet, wobei anstelle des Schwenkantriebes mittels hydraulischer Hubzylinder eine Verstellung mittels einer Gewindespindel 78 vorgesehen ist.

Selbstverständlich kann anstatt der handbetätigten Gewindespindel auch eine Konstruktion mit hilfskraftbetätigtem Hubzylinder wie anhand der Figuren 5 bis 11 beschrieben, eingesetzt werden.

Gemäß Figur 18 ist der mit dem Achsrohr 23 verbundene Hebel 26 jeder Achse mittels einer um ein Drehgelenk 80 schwenkbar angeordneten Gewindehülse 82 mit der Gewindespindel verbunden. Die Gewindespindel 78 ist in einem Lager 86 zusätzlich geführt, das auf eine Quertraverse 84 angebracht ist. Am Ende der Gewindespindel 78 ist ein Kardangelenk 88 angebracht, das die Gewindespindel mit einer Welle 89 verbindet. Die Welle 89 ist in einem Lager 90 geführt und kann mittels einer Kurbel 92 gedreht werden. Beim Drehen der Welle 89 wird über das Kardangelenk 88 auch die Gewindespindel 78 gedreht. Die Lage der Gewindespindel 78 ist relativ zu dem Rahmen bzw. den Trägern 12 des Fahrzeuges mittels des Lagers 86 fixiert. Beim Drehen der Gewindespindel 78 bewegen sich daher die Gewindehülsen 82 relativ zum Rahmen des Fahrzeugs, so daß der Hebel 26 gedreht wird und damit über das Achsohr 23 und die anhand der Figur 9 erläuterte Wirkungsweise die Stellung der Längslenker 45a bis 46b relativ zum Fahrzeugrahmen verändert werden. Da die Räder 6a bis 7b beim Anhängefahrzeug 2 bzw. 17 auf der Fahrbahn 5 aufstehen und das Gewicht des Fahrzeugs tragen, führt die Schwenkung der Längslenker 45a bis 46b nicht zu einem Anheben oder Absenken der Räder, sondern zu einem Anheben oder Absenken des gesamten Fahrzeugs. So kann eine gewünschte Niveauregulierung und damit eine Anpassung an verschiedene Beladungszustände realisiert werden. Das Anhängefahrzeug kann zum Zwecke des Be- oder Entladens auch vollständig gegen den Untergrund abgesenkt werden.

Das erfindungsgemäße Fahrzeug ermöglicht zum ersten Mal eine einfach, schnell und komfortabel zusammenkuppelbare bzw. entkuppelbare Kombination eines Zug- mit einem Anhängefahrzeug, wobei die in gekuppeltem Zustand nicht benötigten hinteren Räder des Zugfahrzeugs von der Fahrbahn abgehoben werden können, ohne daß die Hinterachse mitangehoben wird, ohne daß Stauraum im Zugfahrzeug vermindert wird und ohne eine qualitativ schlechtere Fahrwerkskonstruktion beim Zugfahrzeug in Kauf genommen werden muß.

## Patentansprüche

1. Fahrzeug, bestehend aus einem Zugfahrzeug (2) mit angetriebenen Vorderrädern (8), das über eine Kupplungsvorrichtung, welche wenigstens ein am Rahmen und/oder an der Bodengruppe des Zugfahrzeuges fest angeordnetes Kupplungsmaul (14) aufweist und mit wenigstens einem Kupplungsarm (13) eines mindestens zweiräderigen Anhängefahrzeugs (3) starr verbindbar ist, wobei im zusammengekuppelten Zustand die an Lenkern (19a, 19b) aufgehängten Hinterräder (4) des Zugfahrzeuges (2) von der Fahrbahn abgehoben und die Wirkverbindung zwischen dem Kupplungsmaul (14) und dem Kupplungsmaul (13) beim Einkuppeln automatisch verriegelbar ist und die Hinterräder (4) des Zugfahrzeuges (2) nach Beendigung des Kupplungsvorganges mittels Schwenkantrieb angehoben werden
**dadurch gekennzeichnet,**
daß in dem Kupplungsmaul (14) und dem Kupplungsarm (13) elektrische Kontakte integriert sind, die automatisch eine elektrische Verbindung zwischen dem Zug- und dem Anhängefahrzeug beim Zusammenkuppeln herstellen, daß in dem Kupplungsmaul (14) und dem Kupplungsarm (13) Bremskreiselemente integriert sind, so daß beim Zusammenkuppeln des Kupplungsmauls und des Kupplungsarms automatisch eine Wirkverbindung zwischen dem Bremskreis des Zugfahrzeuges (2) und einem Bremskreis des Anhängefahrzeuges (3) hergestellt wird, und daß die Anhebung der hinteren Zugfahrzeugräder (4) nach Beendigung des Kupplungsvorganges automatisch durch einen für die beiden Lenker (19a, 19b) gemeinsamen Schwenkantrieb (25) erfolgt.

2. Fahrzeug nach Anspruch 1, dadurch **gekennzeichnet,** daß die Lenker als Längslenker (19a,b) ausgebildet und um eine gemeinsame Achse (20) schwenkbar sind.

3. Fahrzeug nach Anspruch 2, dadurch **gekennzeichnet,** daß die Lenker je mit einer parallel zur Achse (20) liegenden Torsionsfeder (22) verbunden sind.

4. Fahrzeug nach Anspruch 2 oder 3, dadurch **gekennzeichnet,** daß zwei um eine gemeinsame Achse (20) drehbar angeordnete Längslenker (19a,b) mittels einer mittig gelagerten Torsionsfeder (22) miteinander verbunden sind.

5. Fahrzeug nach Anspruch 2, dadurch **gekennzeichnet,** daß zwei um eine gemeinsame Achse (20) drehbar angeordnete Längslenker (19a,b) durch ein Querprofil miteinander verbunden sind (Verbundlenkerachse).

6. Fahrzeug nach Anspruch 2, dadurch **gekennzeichnet,** daß die Längslenker (19a,b) an den Enden eines Achsrohres (23) drehbar gelagert sind und mit in der Rohrachse liegenden Profilstäben (40a,b) verbunden sind, die mit federnden Gummiblöcken (42a,b,c) an der Innenwand des Achsrohres abgestützt sind.

7. Fahrzeug nach Anspruch 3 oder 4, dadurch **gekennzeichnet,** daß die Schwenkvorrichtung (25) einen mit der Torsionsfeder (22) verbundenen Hebel (26) aufweist, der an seinem von der Torsionsfeder abgewandten Ende mittels des Schwenkantriebes verschwenkbar ist.

8. Fahrzeug nach Anspruch 5, dadurch **gekennzeichnet,** daß die Schwenkvorrichtung (25) einen mit dem Querprofil verbundenen Hebel aufweist, der an seinem von dem Querprofil abgewandten Ende mittels des Schwenkantriebes verschwenkbar ist.

9. Fahrzeug nach Anspruch 6, dadurch **gekennzeichnet,** daß die Schwenkvorrichtung (25) einen mit dem Achsrohr (23) verbundenen Hebel (26) aufweist, der an seinem von dem Achsrohr abgewandten Ende mittels des Schwenkantriebes verschwenkbar ist.

10. Fahrzeug nach einem der Ansprüche 1 bis 10, dadurch **gekennzeichnet,** daß der Schwenkantrieb ein Hubzylinder (30) ist, der vorzugsweise mittels einer elektrisch betriebenen Hydraulikpumpe gesteuert ist.

11. Fahrzeug insbesondere nach einem der vorhergehenden Ansprüche, dadurch **gekennzeichnet,** daß das eine Fahrzeug (2,3) zumindest einen Kupplungsarm (13) und das andere Fahrzeug ein dazu korrespondierendes Kupplungsmaul (14) aufweisen, wobei der Kupplungsarm und das Kupplungsmaul mit dem Rahmen und/oder der Bodengruppe des jeweiligen Fahrzeugs fest verbunden und beim Einkuppeln automatisch verriegelbar sind.

12. Fahrzeug nach Anspruch 11, dadurch **gekennzeichnet,** daß das Anhängefahrzeug zwei Kupplungsarme (13a,b) aufweist, die durch Verlängerungen der Rahmenlängsträger (12a,b) des Anhängefahrzeugs gebildet sind, und daß das Zugfahrzeug (2) zwei dazu korrespondierende Kupplungsmäuler (14a,b) aufweist.

13. Fahrzeug nach Anspruch 12, dadurch **gekennzeichnet,** daß die beiden Kupplungsmäuler (14a,b) in die hintere Stoßstange (15) des Zugfahrzeugs integriert sind.

14. Fahrzeug nach einem der vorhergehenden Ansprüche, dadurch
**gekennzeichnet,** daß der Kupplungsteil an der Fahrzeugeinheit eine Vorrichtung aufweist, die nach Vollenden des Kupplungsvorgangs den Schwenkantrieb (25) automatisch betätigt.

15. Fahrzeug nach einem der vorhergehenden Ansprüche, dadurch
**gekennzeichnet,** daß in die Kupplungsvorrichtung der Fahrzeugeinheit elektrische Kontakte (74,76) integriert sind, die eine elektrische Verbindung zwischen dem Zug- und dem Anhängefahrzeug beim Zusammenkuppeln herstellen.

16. Fahrzeug, insbesondere nach einem der vorhergehenden Ansprüche, dadurch **gekennzeichnet,** daß das Zugfahrzeug (2) einen Dreikammer-Hauptbremszylinder oder einen Zweikammer-Hauptbremszylinder mit Geberzylinder hat, derart, daß das Zugfahrzeug im entkuppelten Zustand ein Zweikreisbremssystem hat und daß im Anhängefahrzeug (3) ein eigener, über die Kupplungsvorrichtung (13,14) von der dritten Kammer des Dreikammer-Hauptbremszylinders oder von dem Geberzylinder betätigbarer Hauptbremszylinder (72) vorgesehen ist, derart, daß die gekuppelte Fahrzeugeinheit ebenfalls ein Zweikreisbremssystem hat.

17. Fahrzeug nach Anspruch 16, dadurch **gekennzeichnet,** daß in einem Kupplungsarm (13) des Anhängefahrzeugs ein Gestänge (66) angeordnet ist, das mittels eines im Kupplungsmaul (14) angeordneten Hydraulikzylinders (62) zur Aktivierung eines hydraulischen Bremszylinders (72) und damit des Bremssystems des Anhängefahrzeugs betätigt wird.

18. Fahrzeug nach Anspruch 17, dadurch **gekennzeichnet,** daß der Hydraulikzylinder (62) einen Bolzen (61) aufweist, der bei Betätigung der Fußbremse des Zugfahrzeugs in Richtung Anhängefahrzeug (3) ausgeschoben wird, um ständige Bremsbereitschaft zu gewährleisten.

19. Fahrzeug nach Anspruch 17 oder 18, dadurch **gekennzeichnet,** daß das Gestänge (66) des Anhängefahrzeugs (3) in der Länge einstellbar ist, um eine Einstellung des Bremssystems des Anhängefahrzeugs (3) zu ermöglichen.

20. Fahrzeug nach Anspruch 18 oder 19, dadurch **gekennzeichnet,** daß das Gestänge (66) und damit der Bolzen (61) beim Lösen der Bremse durch die Rückstellfedern der Radbremszylinder des Anhängefahrzeugs (3) in den Hydraulikzylinder (62) in seine Bremsbereitschaftsstellung zurückgeschoben wird.

21. Fahrzeug nach einem der vorhergehenden Ansprüche, dadurch
**gekennzeichnet,** daß die Radführungselemente des Anhängefahrzeugs wie diejenigen des Zugfahrzeugs gemäß einem der Ansprüche 1 bis 12 ausgebildet sind.

22. Fahrzeug nach Anspruch 21, dadurch **gekennzeichnet,** daß der Schwenkantrieb des Zugfahrzeugs (1) und/oder des Anhängefahrzeugs (3) mit einer Betätigungs- und/oder Steuerungseinrichtung verbunden ist, mittels derer die Schwenkbarkeit der Lenker zur Niveauregulierung des Anhängefahrzeugs nutzbar ist.

23. Fahrzeug nach einem der Ansprüche 11 bis 22, dadurch **gekennzeichnet,** daß die Kupplungsarme (13a,b) des Anhängefahrzeugs jeweils eine Querbohrung (50) aufweisen und daß in dem korrespondierenden Kupplungsmaul (14a,b) jeweils ein federbelasteter Bolzen (54) mit einer Anlauffläche (55) angeordnet ist, der beim Einführen des Kupplungsarms in das Kupplungsmaul gegen die Vorspannkraft einer Feder (56) zurückgeschoben wird und zur automatischen Verriegelung in die Querbohrung (50) des Kupplungsarmes (13) einrastet.

24. Fahrzeug nach einem der vorhergehenden Ansprüche, dadurch
**gekennzeichnet,** daß das Zugfahrzeug eine Rückwand mit einer Tür (10) aufweist und daß in der Vorderwand des Anhängefahrzeugs ebenfalls eine Tür vorgesehen ist, um im gekuppelten Zustand einen Durchgang zwischen Zug- und Anhängefahrzeug zu bilden.

25. Fahrzeug nach Anspruch 20, dadurch **gekennzeichnet,** daß die Türen (10) des Zug- und des Anhängefahrzeugs als Roll- oder Schiebetüren ausgebildet sind.

## Claims

1. Vehicle comprising a traction vehicle (2) with driven front wheels (8) which by way of a coupling assembly which includes at least one coupling jaw (14) fixedly mounted on the frame and/or the body platform of the traction vehicle and which can be rigidly coupled with at least one coupling arm (13) of a trailer (3) having at least two wheels, wherein in the coupled state the rear wheels (4) of the traction vehicle (2) which are suspended from suspension links (19a, 19b) may be lifted off the road surface, and the operative connection between the coupling jaw (14) and the coupling arm (13) is automatically lockable upon coupling, and the rear wheels (4) of the traction vehicle (2) are lifted by a swivel drive when the coupling operation has been completed,
**characterized** in that electrical contacts are integrated in the coupling jaw (14) and the coupling arm (13) which automatically establishes an electrical connection between the traction vehicle and the trailer upon coupling thereof, that brake circuit elements are integrated in the coupling jaw (14) and the coupling arm (13) so that upon coupling of the coupling jaw and the coupling arm an operative connection is established between the brake circuit of the traction vehicle (2) and a brake circuit of the trailer (3), and that lifting of the rear wheels (4) of the traction vehicle after completion of the coupling operation is automatically performed by a swivel drive (25) common to both suspension links (19a, 19b).

2. Vehicle as claimed in claim 1, characterized in that the suspension links are longitudinal control arms (19a, b) pivotable about a common axis (20).

3. Vehicle as claimed in claim 2, characterized in that each of said suspension links is connected with a torsion bar (2) disposed in parallel with said axis (20).

4. Vehicle as claimed in claim 2 or claim 3, characterized in that two longitudinal control arms (19a, 19b) which are disposed for rotation about a common axis (20) are connected with each other by a centrally disposed torsion bar (22).

5. Vehicle as claimed in claim 2, characterized in that two longitudinal control arms (19a, b) which are disposed for rotation about a common axis (20) are connected with each other by a profiled transverse member (compound suspension).

6. Vehicle as claimed in claim 2, characterized in that the longitudinal control arms (19a, b) are rotatably mounted on the ends of an axle tube (23) and are connected with profiled rods (40a, b) bearing against the inner wall of the axle tube by means of resilient rubber pads (42a, b, c).

7. Vehicle as claimed in claim 3 or claim 4, characterized in that the swivel mechanism (25) comprises a lever (26) which is connected with the torsion bar (22) and adapted to be swivelled by means of the swivel drive at its end remote from the torsion bar.

8. Vehicle as claimed in claim 5, characterized in that the swivel mechanism (25) comprises a lever which is connected with the profiled transverse member and which is adapted to be swivelled by means of the swivel drive at its end remote from the profiled tranverse member.

9. Vehicle as claimed in claim 6, characterized in that the swivel mechanism (25) comprises a lever (26) which is connected with the axle tube (23) and which is adapted to be swivelled by the swivel drive at its end remote from the axle tube.

10. Vehicle as claimed in any one of the claims 1 to 10, characterized in that the swivel drive is a lifting cylinder (30) which is preferably controlled by an electrically operated hydraulic pump.

11. Vehicle especialy as claimed in any one of the preceding claims, characterized in that the one vehicle (2, 3) includes at least one coupling arm (13) while the other vehicle includes a mating coupling jaw (14), the coupling arm and the coupling jaw being fixed to the frame and/or the body platform of the respective vehicle and being automatically lockable upon coupling.

12. Vehicle as claimed in claim 11, characterized in that the trailer comprises two coupling means (13a, b) constituted by extensions of the frame rails (12a, b) of the trailer, and that the traction vehicle (2) comprises two mating coupling jaws (14a, b).

13. Vehicle as claimed in claim 12, characterized in that the two coupling jaws (14a, b) are integrated in the rear bumper (15) of the traction vehicle.

14. Vehicle as claimed in any one of the preceding claims, characterized in that the coupling portion on the vehicle unit comprises means for automatically actuating the swivel drive (25) when the coupling operation has been completed.

15. Vehicle as claimed in any one of the preceding claims, characterized in that electrical contacts (74, 76) are integrated in the coupling device of the vehicle unit which make an electrical connection between the traction vehicle and the trailer upon coupling thereof.

16. Vehicle, particularly as claimed in any one of the preceding claims, characterized in that the traction vehicle (2) has a three-chamber brake master cylinder or a dual-chamber brake master cylinder with an input cylinder such that the traction vehicle in the uncoupled state has a dual circuit brake system, and that in the trailer (3) a separate brake master cylinder (72) is provided, adapted to be actuated through the coupling device (13, 14) by the third chamber of the three-chamber brake master cylinder or by the input cylinder so that the coupled vehicle unit likewise has a dual-circuit brake system.

17. Vehicle as claimed in claim 16, characterized in that a coupling arm (13) of the trailer has a rod (66) disposed therein which is actuated by means of an hydraulic cylinder (62) disposed in the coupling jaw (14) for activating an hydraulic brake cylinder (72) and thus the brake system of the trailer.

18. Vehicle as claimed in claim 17, characterized in that the hydraulic cylinder (62) comprises a pin (61) which is extended upon actuation of the pedal brake of the traction vehicle in the direction of the trailer (3) so as to ensure permanent readiness to brake.

19. Vehicle as claimed in claim 17 or claim 18, characterized in that the rod (66) of the trailer (3) is variable in length so as to permit an adjustment of the brake system of the trailer (3).

20. Vehicle as claimed in claim 18 or claim 19, characterized in that upon release of the brake the rod (66) and thus the pin (61) are pushed back into the hydraulic cylinder (62) to the readiness position thereof by the restoring springs of the wheel brake cylinders of the trailer (3).

21. Vehicle as claimed in any one of the preceding claims, characterized in that the wheel suspension elements of the trailer are configured like those of the traction vehicle according to any one of the claims 1 to 12.

22. Vehicle as claimed in claim 21, characterized in that the swivel drive of the traction vehicle (1) and/or the trailer (3) is connected with actuating means and/or control means through which the swivel feature of the suspension links can be utilized for level control of the trailer.

23. Vehicle as claimed in any one of the claims 11 to 22, characterized in that the coupling arms (13a, b) of the trailer each have a transverse hole (50) and that the mating coupling jaws (14a, b) respectively include therein a spring-loaded pin (54) with a butting face (55), said pin upon insertion of the coupling arm into the coupling jaw being pushed back against the biasing action of a spring (56) and latching in said transverse hole (50) of the coupling arm (13) for automatic locking therein.

24. Vehicle as claimed in any one of the preceding claims, characterized in that the traction vehicle comprises a rear wall having a rotor (10) and that the front wall of the trailer is likewise provided with a door so as to create a through-way between traction vehicle and trailer in the coupled state thereof.

25. Vehicle as claimed in claim 20, characterized in that the doors (10) of traction vehicle and trailer are designed as rolling or sliding doors.

## Revendications

1. Véhicule comprenant un tracteur (2) à roues avant (8) motrices qui est susceptible d'être relié à au moins un bras de couplage (13) d'une remorque (3) à au moins deux roues par l'intermédiaire d'un dispositif de couplage qui comprend au moins une mâchoire de couplage (14) solidaire du cadre et/ou du châssis du tracteur, dans lequel, dans la position accouplée, les roues arrière (4) du tracteur (2), montées sur des bras oscillants (19a, 19b), sont relevées par rapport à la route et la liaison entre la mâchoire de couplage (14) et le bras de couplage (13) est automatiquement verrouillable lors de l'accouplement, les roues arrière (4) du tracteur (2) étant relevées après la phase d'accouplement à l'aide d'une commande de basculement,
caractérisé en ce que
des contacts électriques sont intégrés dans la mâchoire de couplage (14) et dans le bras de couplage (13) et établissent automatiquement une liaison électrique entre le tracteur et la remorque lors de l'accouplement,
des éléments de circuit de freinage sont intégrés dans la mâchoire de couplage (14) et dans le bras ae couplage (13), de manière que, lors de l'accouplement de la mâchoire de couplage et du bras de couplage, il s'établit automatiquement une liaison entre le circuit de freinage du tracteur (2) et un circuit de freinage de la remorque (3), et
le relevage des roues arrière (4) du tracteur se produit automatiquement après l'accouplement par l'intermédiaire d'une commande de basculement (25) commune aux deux bras oscillants (19a, 19b).

2. Véhicule selon la revendication 1, caractérisé en ce que les bras oscillants sont longitudinaux (19a, b) et oscillent autour d'un axe commun (20).

3. Véhicule selon la revendication 2, caractérisé en ce que les bras oscillants sont reliés chacun à un ressort de torsion (22) parallèle à l'axe (20).

4. Véhicule selon la revendication 2 ou 3, caractérisé en ce que deux bras oscillants longitudinaux (19a, b) sont disposés pour tourner autour d'un axe commun (20) et sont reliés l'un à l'autre par l'intermédiaire d'un ressort de torsion (22) disposé de façon centrale.

5. Véhicule selon la revendication 2, caractérisé en ce que deux bras oscillants longitudinaux (19a, b) disposés pour tourner autour d'un axe commun (20) sont reliés l'un à l'autre par un profilé transversal (axe de liaison de bras oscillants).

6. Véhicule selon la revendication 2, caractérisé en ce que les bras oscillants longitudinaux (19a, b) sont disposés pour tourner autour des extrémités d'un axe tubulaire (23) et sont reliés à des barres profilées (40a, b) disposées à l'intérieur de l'axe tubulaire, qui sont supportées par la paroi interne de l'axe tubulaire avec des blocs en caoutchouc élastique (42a, b, c).

7. Véhicule selon la revendication 3 ou 4, caractérisé en ce que la commande de basculement (25) comprend un levier (26) relié au ressort de torsion (22), qui est inclinable à son extrémité éloignée du ressort de torsion par l'intermédiaire de la commande de basculement.

8. Véhicule selon la revendication 5, caractérisé en ce que la commande de basculement (25) comprend un levier relié au profilé transversal, qui est inclinable par son extrémité éloignée du profilé transversal par l'intermédiaire de la commande de basculement.

9. Véhicule selon la revendication 6, caractérisé en ce que la commande de basculement (25) comprend un levier (26) relié à l'axe tubulaire (23), qui est inclinable par son extrémité éloignée de l'axe tubulaire par l'intermédiaire de la commande de basculement.

10. Véhicule selon l'une des revendications 1 à 10, caractérisé en ce que la commande de basculement est un vérin (30) qui est de préférence actionné par une pompe hydraulique entraînée électriquement.

11. Véhicule en particulier selon l'une quelconque des revendications précédentes, caractérisé en ce que l'un parmi le tracteur et la remorque (2, 3) comprend au moins un bras de couplage (13), et l'autre une mâchoire de couplage (14) correspondante, le bras de couplage et la mâchoire de couplage étant solidaires du cadre et/ou du châssis du tracteur ou remorque et étant automatiquement verrouillables lors de l'accouplement.

12. Véhicule selon la revendication 11, caractérisé en ce que la remorque comprend deux bras de couplage (13a, b) qui sont formés par des prolongements des longerons (12a, b) de la remorque, et en ce que le tracteur (2) comprend deux mâchoires de couplage correspondantes (14a, b).

13. Véhicule selon la revendication 12, caractérisé en ce que les deux mâchoires de couplage (14a, b) sont intégrées au pare-chocs arrière (15) du tracteur.

14. Véhicule selon l'une quelconque des revendications précédentes, caractérisé en ce que la partie de couplage du véhicule accouplé comprend un dispositif qui actionne automatiquement la commande de basculement (25) à la fin de l'accouplement.

15. Véhicule selon l'une quelconque des revendications précédentes, caractérisé en ce que le dispositif de couplage du véhicule accouplé comprend des contacts électriques (74, 76) intégrés qui établissent une liaison électrique entre le tracteur et la remorque lors de l'accouplement.

16. Véhicule, en particulier selon l'une quelconque des revendications précédentes, caractérisé en ce que le tracteur (2) est muni d'un cylindre de freinage principal à trois chambres ou un cylindre de freinage principal à deux chambres avec un maître-cylindre, de manière que le tracteur en position désaccouplée est muni d'un système de freinage à deux circuits et en ce que la remorque (3) est munie d'un cylindre de freinage principal (72) qui est susceptible d'être actionné par la troisième chambre du cylindre de freinage principal à trois chambres ou par le maître-cylindre, par l'intermédiaire du dispositif de couplage (13, 14) de manière que le véhicule accouplé comprend également un système de freinage à deux circuits.

17. Véhicule selon la revendication 16, caractérisé en ce que dans un bras de couplage (13) de la remorque est disposée une tringle (66) qui est actionnée par l'intermédiaire d'un cylindre hydraulique (62) disposé dans la mâchoire de couplage (14) pour activer un cylindre de freinage hydraulique (72) et donc le système de freinage de la remorque.

18. Véhicule selon la revendication 17, caractérisé en ce que le cylindre hydraulique (62) est muni d'un tourillon de frein (61) qui, lors de l'utilisation de la pédale de frein du tracteur, est poussé dans la direction de la remorque (3) pour garantir une disponibilité de freinage permanente.

19. Véhicule selon la revendication 17 ou 18, caractérisé en ce que la tringle (66) de la remorque (3) est réglable en longueur pour permettre un réglage du système de freinage de la remorque (3).

20. Véhicule selon la revendication 18 ou 19, caractérisé en ce que la tringle (66), et donc le tourillon de frein (61), est repoussé à sa position de disponibilité de freinage dans le cylindre hydraulique (62) lors du desserrage du frein par les ressorts de rappel du cylindre de frein des roues de la remorque (3).

21. Véhicule selon l'une quelconque des revendications précédentes, caractérisé en ce que les éléments de montage des roues de la remorque sont formés comme ceux du tracteur selon l'une des revendications 1 à 12.

22. Véhicule selon la revendication 21, caractérisé en ce que la commande de basculement du tracteur (2) et/ou de la remorque (3) est reliée à un dispositif d'actionnement et/ou de commande, au moyen duquel l'inclinaison des bras oscillants est utilisable pour régler la hauteur de la remorque.

23. Véhicule selon l'une des revendications 11 à 22, caractérisé en ce que les bras de couplage (13a, b) de la remorque ont chacun un perçage transversal (50) et en ce que dans la mâchoire de couplage correspondante (14a, b) est disposée une tige (54) sollicitée par ressort présentant une surface de butée (55), qui lors de la pénétration du bras de couplage dans la mâchoire de couplage est poussée à l'encontre de la précharge d'un ressort (56) et qui est libérée dans un perçage transversal (50) du bras de couplage (13) pour effectuer un verrouillage automatique.

24. Véhicule selon l'une quelconque des revendications précédentes, caractérisé en ce que le tracteur comprend une paroi arrière munie d'une porte (10) et en ce que la paroi antérieure de la remorque est également munie d'une porte afin de former, en position accouplée, un passage entre le tracteur et la remorque.

25. Véhicule selon la revendication 20, caractérisé en ce que les portes (10) du tracteur et de la remorque sont enroulables ou coulissantes.
